# EUROPEAN PATENT APPLICATION

(11) **EP 2 988 308 A1**
(43) Date of publication of application: **24.02.2016**
(21) Application number: 15306179.1
(22) Date of filing: 20.07.2015
(51) Int. Cl.: H01B 3/30, H01B 3/44, H01B 7/02

(54) **ARRANGEMENT AND CONSTRUCTION FOR AIRFRAME WIRES**

(30) Priority: 19.08.2014 US 201414463074
(71) Applicant: Nexans, 75008 Paris (FR)
(72) Inventor: GETZIE, Travis, Lancaster, PA Pennsylvania 17601 (US); JOLLY, Michael W., Raleigh, NC North Carolina 27612 (US); IDE, James, Clayton, NC North Carolina 27527 (US)
(74) Representative: Feray, Valérie

(57) **Abstract**

An airframe wire is provided having a conductor and a first inner layer of polyimide insulation which is a helically applied tape including a polyimide component. A second outer layer of fluoropolymer insulation is a helically applied tape made from PTFE, where the second outer PTFE layer of fluoropolymer insulation is constructed as a substantially seamless outer layer so as to provide a hydrostatic barrier for the underlying inner first layer.

## Description

### Background -

### Field of the Invention -

This invention relates to airframe wires. More particularly, the present invention relates to a particular polymer construction for insulating airframe wire.

### Description of Related Art -

In the area of airframe wires, such as those used in the aeronautics industry, the insulation typically must meet more rigorous standards depending on the application. As one example, the AS22759 standard for airframe wires sets a number of minimum test requirements for wires used in the military and commercial aerospace applications.

This AS22759/87-92 and 187-192 standard (herein after referred to generically "AS22759" for convenience) includes various requirements for the wire insulation including Elongation (40% Average Minimum), Dielectric Strength 4000 Volts/Mil (Average Minimum) and 5000 hours Hydrolysis testing (to confirm wire continues to meet electrical and mechanical requirements). I n addition to these mechanical and electric tests, the AS22759 standard also requires a series of immersion tests in various hydrocarbons to check for resistance to different hydrocarbons that may be encountered within a airframe (e.g. hydraulic fluid, jet fuel, de icing liquids etc...)

In order to meet these specifications the typical insulation designs for smaller wires (AWG 26 up to AWG 10) call for a first layer of polyimide tape (fluoropolymer/polyimide/fluoropolymer) and then an outer layer of fluoropolymer (PTFE - Polytetrafluoroethylene). Larger wires may have additional fluoropolymer layers. See e.g. AS22759/187 and AS22759/87 specifications.

The polyimide (PI) tape layer acts as the primary insulation and provides the mechanical and electrical characteristics for the overall insulation, such as the elongation requirements and dielectric strength. However, PI tape is not particularly stable and if exposed to water or hydrocarbons its mechanical and electrical properties break down quickly. For example, because PI is made using a condensation reaction, water will essentially undo the reaction, thus the polyimide degrades in the presence of water (or water vapour), so it typically requires an outer tape wrap layer that is hydrophobic to prevent the water from contacting it.

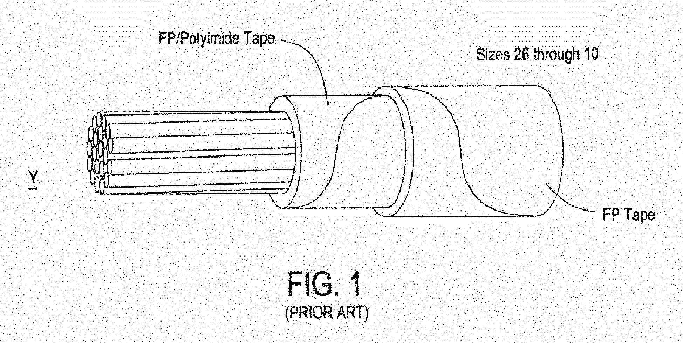

Ideally, the outer layer is not only hydrophobic but is also resistant to most chemicals found in and around airplanes (hydraulic fluid, jet fuel, de icing liquids, cleaning solvents, etc.),. The outer layer is preferably UV markable for wire identification purposes. As such, prior art cables usually make the outer fluoropolymer layer from a helically wrapped polytetrafluoroethylene (PTFE) tape. PTFE is both water and hydrocarbon resistant. A picture of the prior art wire according to this construction is shown in Figure 1.

I n both cases, the polyimide (PI) and polytetrafluoroethylene (PTFE) layers are extruded as tapes and then applied in a helical wrap around the conductor. One side effect of this arrangement is that when the outer layer of PTFE tape is wrapped the overlaps of the helically wrapped tape leaves a seam(s) through which water can seep through, as indicated during the hydrolysis testing. As a result some water still gets through to the underlying PI layer. Thus, even though the PI is mostly protected in order to prevent mechanical and electrical breakdown, there is a need for a more robust PI with longer molecular chain, which is generally more stable than shorter chain lower molecular weight PI that could have been used absent the issues raised with water seepage.

Some prior art PI tapes used for the inner layer have end groups specifically chosen to have increased hydrophobicity and also increased molecular weight to give the PI material more time to degrade before electrical/mechanical failure. For example current designs typically use a PI tape sold under the tradename Dupont 200TRT515 (which is a .0005" (FP)/.0010" (Polyimide)/.0005" (FP) .0020" film) using a higher molecular weight PI. As noted above, due to the condensation reaction in creating the polyim ide, water essentially reverse the reaction. I n order to mitigate water damage, the polyimide in this tape has such a high molecular weight that even after degradation that occurs due to exposure of the entire insulated wire to 5000 hours underwater, and the resulting water seepage through the seams in the outer PTFE tape during that period, the molecular weight remains high enough to pass the electrical testing. However, the more robust polyimide tapes described above are expensive. Nevertheless they are used owing to the hydrolytic stability.

### Objects and Summary -

The present arrangement overcomes the drawbacks associated with the prior art by using a combination of a lighter molecular weight polyimide (PI) tape as the internal tape in combination with modified PTFE outer tape layer. The lower molecular weight PI tape that lacks the end group functionalization is significantly less expensive than the ones used in connection with prior are insulating arrangements. And, although the polyimide (PI) tapes in accordance with various embodiments of the present invention is less robust regarding water resistance, the modified outer polytetrafluoroethylene (PTFE) tape provides a more seamless outer shell than the one available in the prior art, providing an enhanced water/hydrolysis barrier.

This outer polytetrafluoroethylene (PTFE) shell, in accordance with various embodiments of the invention, allows for the use of a lower cost PI low molecular weight tape for the inner layer such the polyimide (PI) tape sold under the trade names 2919 from Saint Gobain, 200TRN515, and T55N10 from Kaneka which are about half as expensive owing to lower molecular weight and no end group functionalization to increase hydrophobicity such as the ones identified above in connection with the prior art arrangements. In accordance with various embodiments of the invention, such lower cost polyimide (PI) tapes still meet the various mechanical and electrical standards of AS22759 and yet effectively withstand the tests required by the industry standards. To this end, in the present arrangement owing to the enhanced protection from the modified PTFE outer tape layer, the lower cost low molecular weight PI tape is able to remain stable under the hydrolysis testing.

As such, the present invention in accordance to various embodiments, relates to an airframe wire having a conductor and a first inner layer of polyimide insulation which is a helically applied tape including a polyimide component. A second outer layer of fluoropolymer insulation is a helically applied tape made from PTFE, where the second outer PTFE layer of fluoropolymer insulation is constructed as a substantially seamless outer layer so as to provide a hydrostatic barrier for the underlying inner first layer.

### Brief Description of the Drawings -

The present invention can be best understood through the following description and accompanying drawings, wherein:
Figure 1 illustrates a prior art air frame wire; and
Figure 2 illustrates an air frame wire according to one embodiment,
Figure 3 illustrates the shape of an outer layer tape according to one embodiment; and
Figure 4 is a graph showing data obtained for a hydrolysis testing comparing the performance of a cable insulated in accordance with various features of the present invention with prior art cable insulations.

### Detailed Description -

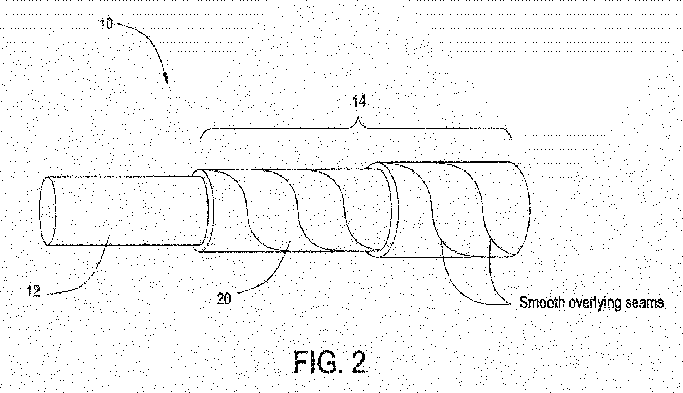

In one embodiment of the present invention as shown in Figure 2 an airframe wire 10 has a conductor 12 and an insulation 14 thereon. Insulation 14 includes at least two layers. A first layer 20 that preferably includes a three-ply layer of polyimide tape wrapped helically around conductor 12.

Advantageously, layer 20 is constructed as a three-ply tape having a layer of PI in between two protective layers of fluoropolymer(FP) each layer having thicknesses such as for example 0.0005" for each of the (FP)layers and 0.0010" for the polyimide layer for a total thickness of 0.0020" film. Such materials, including the PI in this tape preferably do not have end group chemistry that makes them more hydrolytically stable (i.e. hydrophobic) and also exhibit a lower molecular weight and are thus otherwise less expensive than the prior art PI tapes. Examples of this tape can be model number 2929 from Saint Gobain, T55N10 from Kaneka, and 200TRN515 from Dupont. This allows for a non-stabilized less expensive PI tape to be used for meeting the AS22759/87-92 and /187-192 standards. It is noted that the above list of materials and dimensions for layer 20 is considered exemplary. Any three-ply PI tape may be used for layer 20 provided it can meet the necessary mechanical/electrical and hydrostatic resistance requirements in the desired test requirements, such as those outlined in AS22759.

The outer layer 22, as shown in Figure 2, is constructed as a single layer of PTFE tape that is helically wrapped over layer 20 and thereafter sintered. Unlike an ordinary prior art PTFE tape, which is usually extruded in a substantially rectangular shape, in the present arrangement, the PTFE resins are mixed with a high lubricant percentage, such as for example with 18% Isopar M lubricant The resultant blend is extruded using a standard high pressure extrusion process into a specific diameter rod. The diameter is preferably based on the desired final size of the tape which in turn is based on the wire size. The extrusion pressure is tightly controlled to enhance the material's tensile and elongation characteristics.

Thereafter, the extruded PTFE rod is flattened using a regular two roll mill (not shown) into a specific shape and thickness to conform the finished wire insulation dimensions.

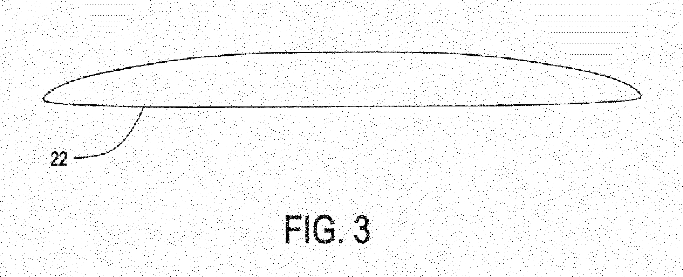

In accordance with one embodiment, the shape of tape 22 tape is non-symmetric double convex as shown for example in Figure 3. In the present arrangement, the controlling of the mechanical properties of the rod and the final shape of the tape maximize the film's tensile characteristics which enhances the processability as tape 22 is helically applied to conductor 12. Once tape 22 is applied helically over inner PI layer 20, tape 22 is sintered (cured). The combination of the high lubrication content, double convex surface and application tension of tape 22, combined with the high temperature sintering results in the flatting and smoothing of applied tape 22, so that the double convex surface flattens out and smooths against the next adjacent iteration of the helical warp so that overlap seams essentially disappear or nearly disappear. Such an outer PTFE layer 22 exhibits reduced water vapor permeability, improving the hydrolytic stability of the insulating wall and reducing the need for a highly hydrolytically resistant inner layer 20.

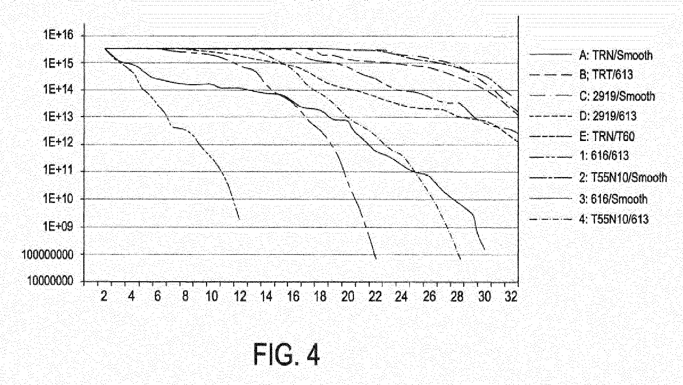

Figure 4 is a graph showing data obtained for a hydrolysis testing. The Y axis is the resistance of the wire in a saline solution. The X axis is the number of weeks of testing. To pass the test found in AS22759, the samples must be able to have a resistance greater than 1.0X10^ 12 for 32 weeks in such conditions. I n the key "Smooth" refers to an outer layer 22 that is smooth as described above whereas "613" is standard prior art PTFE tape/wrap technology. From the data in Figure 4 it can be seen that the TRN/Smooth, 2919/Smooth, T55N10/Smooth all pass the tests. On the other hand TRN/613 and T55N10/613 do not, showing that layer 22 is effective at allowing an otherwise inadequate PI layer 20 to withstand the AS22759 standards requirements. It is noted that 2919/613 also passes using the prior art outer PTFE tape, but the present arrangement 2919/Smooth passes with better characteristics. It can be seen from Figure 4 that the "616" inner PI tape (120FN616) which is a 1.2 mil tape (instead of 2 mils - it has 1 mil of PI and 0.1 mil FEP layer on each side) does not pass the hydrolysis test using either the prior art or present version of outer layer 22. Based on this, inner layer 20 even, though it can be made using lower molecular weight PI, still requires more than 0.1 fluoropolymer on either side the PI (three-ply tape).

While only certain features of the invention have been illustrated and described herein, many modifications, substitutions, changes or equivalents will now occur to those skilled in the art. It is therefore, to be understood that this application is intended to cover all such modifications and changes that fall within the true spirit of the invention.

## Claims

1. An airframe wire comprising:
a conductor;
a first inner layer of polyimide insulation for said conductor, said first layer being a helically applied tape including a polyimide component; and
a second outer layer of fluoropolymer insulation, said second layer being a helically applied tape made from PTFE,
wherein said second outer PTFE layer of fluoropolymer insulation is constructed as a substantially seamless outer layer so as to provide a hydrostatic barrier for said underlying inner first layer.

2. The airframe wire as claimed in claim 1 wherein said first inner layer of polyimide insulation is a three-ply insulation with a layer of PI between two protective layers of fluoropolymer.

3. The airframe wire as claimed in claim 2, wherein said inner layer of polyimide three-ply insulation is a 0.0020" inch film with 0.0005" (FP)/0.0010" (Polyimide)/0.0005" (FP).

4. The airframe wire as claimed in claim 1, wherein said inner layer of polyimide insulation uses a low molecular weight polyimide with no hydrophobic functional groups.

5. The airframe wire as claimed in claim 1, wherein said second outer layer of fluoropolymer insulation is initially extruded as a rod of PTFE.

6. The airframe wire as claimed in claim 5, wherein said second outer layer of fluoropolymer insulation, initially extruded as rod of PTFE, is two roll milled into a flat tape with a non-symmetric double convex tape.

7. The airframe wire as claimed in claim 6, wherein said non-symmetric double convex tape of PTFE is helically applied to said conductor and sintered to form said substantially seamless outer layer.
